# EUROPEAN PATENT SPECIFICATION

(11) **EP 3 099 397 B1**
(45) Date of publication and mention of the grant of the patent: **08.03.2023**
(21) Application number: 15743214.7
(22) Date of filing: 29.01.2015
(51) Int. Cl.: B01D 53/02, C09C 1/48

(54) **INTEGRATION OF PLASMA AND HYDROGEN PROCESS WITH COMBINED CYCLE POWER PLANT AND STEAM REFORMERS**
INTEGRATION VON PLASMA- UND WASSERSTOFFVERFAHREN MIT KOMBIKRAFTWERK UND DAMPFREFORMERN
INTÉGRATION D'UN PROCÉDÉ AU PLASMA ET À L'HYDROGÈNE DANS UNE CENTRALE ÉLECTRIQUE À CYCLE COMBINÉ ET REFORMEURS À VAPEUR

(30) Priority: 30.01.2014 US 201461933494 P; 07.01.2015 US 201514591528
(43) Date of publication of application: 07.12.2016
(73) Proprietor: Monolith Materials, Inc., Lincoln, Nebraska 68508 (US)
(72) Inventor: JOHNSON, Peter L., Mountain View, California 94303 (US); HANSON, Robert J., San Carlos, California 94070 (US); TAYLOR, Roscoe W., San Mateo, California 94401 (US)
(74) Representative: TLIP Limited
(86) International application number: PCT/US2015/013482
(87) International publication number: WO 2015/116797

(56) References cited:
- WO-A1-2013/134093
- DE-A1- 19 807 224
- US-A- 4 553 981
- US-A1- 2002 000 085
- US-A1- 2004 148 860
- US-A1- 2006 037 244
- US-A1- 2008 182 298
- US-A1- 2008 226 538
- US-A1- 2012 232 173
- US-A1- 2013 323 614
- US-B2- 6 602 920
- US-B2- 8 257 452
- PAOLO CHIESA ET AL: "Using Hydrogen as Gas Turbine Fuel", JOURNAL OF ENGINEERING FOR GAS TURBINES AND POWER., vol. 127, no. 1, 1 January 2005 (2005-01-01), page 73, XP055437422, US ISSN: 0742-4795, DOI: 10.1115/1.1787513
- TSUJIKAWA Y ET AL: "Analysis of a gas turbine and steam turbine combined cycle with liquefied hydrogen as fuel", INTERNATIONAL JOURNAL OF HYDROGEN ENERGY, ELSEVIER SCIENCE PUBLISHERS B.V., BARKING, GB, vol. 7, no. 6, 1 January 1982 (1982-01-01) , pages 499-505, XP025591272, ISSN: 0360-3199, DOI: 10.1016/0360-3199(82)90108-2 [retrieved on 1982-01-01]

## Description

### TECHNICAL FIELD

The field of art to which this invention generally pertains is methods and apparatus for making use of electrical energy to effect chemical changes.

### BACKGROUND

US-A-2012/0232173 discloses a method of producing purified hydrogen gas comprising, passing gas from a plasma process into a pressure swing adsorption system generating a purified hydrogen product and a pressure swing adsorption tail gas, separating the purified hydrogen product, and separating the pressure swing adsorption tail gas-reuse back into the plasma process. USA-2013/0323614 discloses a method of producing purified hydrogen gas and fuel comprising, passing a gas from a plasma process into a pressure swing adsorption system generating a purified hydrogen product and a pressure swing adsorption tail gas, separating the purified hydrogen product and separating the pressure swing adsorption tail gas for use as fuel. US-A-2004/0148860 discloses a process of producing carbon black by means of a plasma process fed with methane (CH4), e.g. as natural gas, is fed. Besides carbon black also hydrogen is produced, i.e. a tail gas containing hydrogen is obtained.

No matter how unique the product or process, over time, all manufacturing processes look for ways to become more efficient and more effective. This can take the form of raw material costs, energy costs, or simple improvement in process efficiencies, among other things. In general, raw material costs and energy resources, which are a substantial part of the cost of most if not all manufacturing processes, tend to actually increase over time, because of scale up and increased volumes, if for no other reasons. For these, and other reasons, there is a constant search in this area for ways to not only improve the products being produced, but to also produce them in more efficient and effective ways with lower overall environmental impact.

The systems described herein meet the challenges described above while accomplishing additional advances as well.

### BRIEF SUMMARY

A method of producing purified hydrogen gas and fuel is described including passing tail gas from a carbon black generating plasma process into a pressure swing adsorption system generating a purified hydrogen product and a pressure swing adsorption tail gas, separating and compressing the purified hydrogen product, and separating and compressing the pressure swing adsorption tail gas for use as fuel, or reuse back into the plasma process.

Additional embodiments include: the method described above including mixing the tail gas from a plasma process with a feed stream from a steam methane reformer prior to passing the combined tail gas into a pressure swing adsorption system; the method described above where the feed stream from a steam methane reformer and the tail gas from a plasma process are compressed prior to mixing; the method described above including compressing a feed stream of hydrogen rich gas and adding it to the tail gas from a plasma process prior to passing the tail gas from a plasma process into the pressure swing adsorption system; the method described above where the hydrogen rich gas is generated from a steam reforming process; the method described above where at least a portion of the pressure swing adsorption tail gas is used in the carbon black generating process; the method described above where the feed stream flows at 82 432 000 Sm³/h (70.000 million standard cubic feet per day (MMSCFD)), the feed stream hydrogen is at 97.49% purity, the flow is at 170 kPa (10 pounds per square inch gauge (psig)), 37.8°C (100 ^{O} F), 1 026 620.5 MJ (973.1 million British thermal units (MMBTU)) higher heating value (HHV/hour), and 869 742 MJ (824.4 MMBTU) lower heating value (LHV/hour), the feed stream compressor is at 2 X 7000 NHP, the purified hydrogen is flowed into the hydrogen product compressor at 2 514.5 kPa (350 psig) at 43.3°C (110 ^{O} F) and compressed at 4,500 NHP and the pressure swing adsorption tail gas is flowed into the PSA tail gas compressor at 136 kPa (5 psig) at 32.2°C (90 ^{O} F) at 1,250 NHP, the total hydrogen recovery out of the process is 89.5%, the purified hydrogen product is 82 432 000 Sm³/h (70.000 MMSCFD) of hydrogen at 100% purity, 6 306 kPa (900 psig), 37.8°C (100 ^{O} F), 872 485 MJ (827.0 MMBTU) (HHV/hour) and 736 812 MJ (698.4 MMBTU (LHV/hour), and the fuel produced is 10 504 192 Sm³/h (8.920 MMSCFD) of fuel at 446 kPa (50 psig), 37.8°C (100 ^{O} F), 154 663 MJ (146.6 MMBTU) (HHV/hour) and 134 934 MJ (127.9 MMBTU) (LHV/hour); the method described above where the tail gas has a flowrate of 82 432 Sm³/h (70 MMSCFD), a pressure of 170 kPa (10 psig), a temperature of 37.8°C (100°F), a molecular weight of 2.53 grams/mole, 97.49 mol % hydrogen, 0.20 mol % nitrogen, 1.00 mol % carbon monoxide, 1.10 mol % methane, 0.14 mol % acetylene, 0.07 mol % HCN, and 0.00 mol % water.

These, and additional embodiments, will be apparent from the following descriptions.

### BRIEF DESCRIPTION OF THE DRAWINGS

Figure 1 shows a schematic representation of typical tail gas integration system as described herein.
Figure 2 shows a schematic representation of a typical combined cycle power plant integration system as described herein.
Figure 3 shows a schematic representation of a typical simple cycle power plan integration system as described herein.
Figure 4 shows a schematic representation of a typical steam power plant integration system as described herein.

### DETAILED DESCRIPTION

The particulars shown herein are by way of example and for purposes of illustrative discussion of the various embodiments of the present invention only and are presented in the cause of providing what is believed to be the most useful and readily understood description of the principles and conceptual aspects of the invention. In this regard, no attempt is made to show details of the invention in more detail than is necessary for a fundamental understanding of the invention, the description making apparent to those skilled in the art how the several forms of the invention may be embodied in practice.

The present invention will now be described by reference to more detailed embodiments. This invention may, however, be embodied in different forms and should not be construed as limited to the embodiments set forth herein. Rather, these embodiments are provided so that this disclosure will be thorough and complete, and will fully convey the scope of the invention to those skilled in the art.

Unless otherwise defined, all technical and scientific terms used herein have the same meaning as commonly understood by one of ordinary skill in the art to which this invention belongs. The terminology used in the description of the invention herein is for describing particular embodiments only and is not intended to be limiting of the invention. As used in the description of the invention and the appended claims, the singular forms "a," "an," and "the" are intended to include the plural forms as well, unless the context clearly indicates otherwise.

Additional advantages of the invention will be set forth in part in the description which follows, and in part will be obvious from the description, or may be learned by practice of the invention. It is to be understood that both the foregoing general description and the following detailed description are exemplary and explanatory only and are not restrictive of the invention, as claimed.

Steam reforming of natural gas, or steam methane reforming (SMR), is a commonly used method for producing large volumes of hydrogen gas from natural gas. For example, in the presence of a metal-based catalyst, such as nickel, steam reacts with methane to yield carbon monoxide and hydrogen:

CH₄ + H₂O → CO + 3 H₂

Additional hydrogen can also be produced from the carbon monoxide generated:

CO+H₂O → CO₂ + H₂

Most of the millions of tons of hydrogen produced each year, e.g., in the United States, is produced by the steam reforming of natural gas.

Pressure swing adsorption (PSA) technology is typically used to separate gases in a mixture of gases, under pressure, according to the individual gases' molecular characteristics and affinity for specific adsorbent materials. Particular absorptive materials, such as zeolites, are typically used as molecular sieves, preferentially adsorbing a particular gas at high pressure. The process then "swings" to low pressure operation to desorb the particular adsorbed gas. PSA processes are commonly used to purify the hydrogen gas produced from the SMR process.

Although complex, simple cycle power plants are typically made up of gas turbines connected to an electrical generator. The gas turbines are typically made up of a gas compressor, fuel combustors and a gas expansion power turbine. In the gas turbine, air is compressed in the gas compressor, energy is added to the compressed air by burning liquid or gaseous fuel in the combustor, and the hot, compressed products of combustion are expanded through the gas turbine, which drives the compressor and an electric power generator. In a combined cycle power plant, the output from one system is combined with the overall input into a simple cycle steam power plant to increase its overall efficiency.

Both carbon black processing and the use of plasma in other processes and chemical processes can generate useful hydrogen as a by-product. The hydrogen produced can be used by other end users, e.g., like an oil refinery. Typically, the hydrogen needs to be purified and compressed before delivery to the end user. As described herein, many advantages can be realized by the direct integration of carbon black and other plasma processing into an existing process. For example, countless efficiencies can be realized as a result of more advantageous technical integration of such systems. Common equipment can be shared, such as a single PSA, a single hydrogen gas compressor, etc. Multiple energy or chemical streams can be integrated, for example, the hydrogen produced can be directly integrated with a combined cycle power plant and electricity can be received back.

US Patent No. 6,395,197 discloses a method for producing carbon black and hydrogen in a plasma system and then using the hydrogen to generate electricity in a fuel cell. It does not describe integration of a plasma carbon black and hydrogen plant with a PSA compressions system, a combined cycle power plant, a simply cycle power plant, or a steam power plant. In addition the system described is of bench scale, and many of the challenges associated with integration of a carbon black and hydrogen plasma plant are a result of scale.

As described herein, one embodiment is to only have one stream of input into the PSA and compression system, the tail gas from the plasma process. A second embodiment include mixing the tail gas from the plasma process with a feed stream generated from a steam methane reformer and then passing the combined input stream into the PSA and compression system. A third embodiment includes compressing a feed stream that was generated via steam methane reforming and then mixing a compressed tail gas from the plasma process with the compressed feed stream. The combined stream then is injected into the PSA system. A fourth embodiment includes recycling a portion of the pressure swing adsorption tail gas back into the carbon black generating process.

### EXAMPLE 1

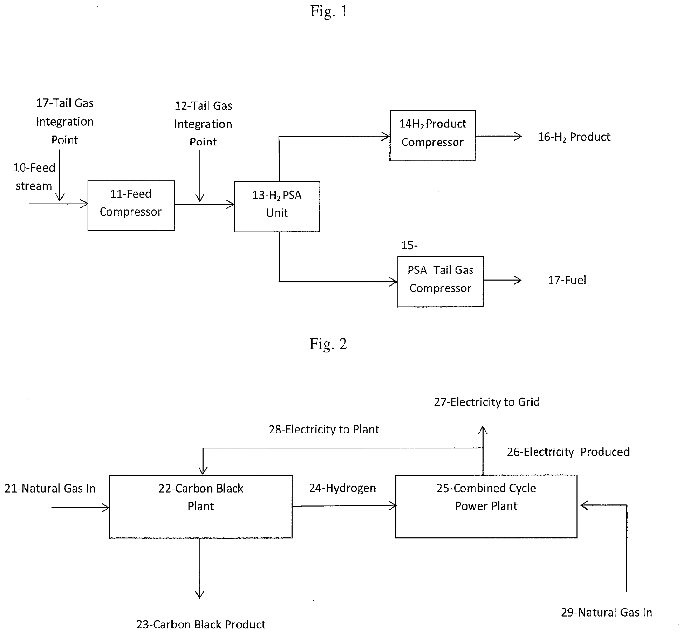

As shown schematically in Figure 1, a feed stream (10) of 82 432 000 Sm³/h (70.000 million standard cubic feet per day (MMSCFD)), of hydrogen at 97.49% purity, 170 kPa (10 pounds per square inch gauge (psig)), 37.8°C (100 ^{O} F), 1 026 620,5 MJ (973.1 million British thermal units (MMBTU)) higher heating value (HHV/hour), and 869 742 MJ (824.4 MMBTU) lower heating value (LHV/hour) was flowed into a feed compressor (11) at 2 X 7000 NHP ( Nominal Horse Power Flow rate = 82 432 Sm³/h (70 MMSCFD)). At this point the tail gas (12) from a carbon black production plant is added to the compressed stream prior to it entering into the PSA unit (13). It should also be noted that it is not required that there be a feed stream and an additional tail gas stream. The feed stream can be just the tail gas from a plasma process stream and added at the front end of the system (17). The tail gas properties are shown in the Table below.

**Table**

| | | |
|---|---|---|
| Flowrate | MMSCFD | 70 |
| Pressure | psig | 10 |
| Temperature | °F | 100 |
| Molecular | | |
| Weight | grams/mole | 2.53 |
| Hydrogen | Mol %: | 97.49% |
| Nitrogen | Mol %: | 0.20% |
| Carbon | | |
| Monoxide | Mol %: | 1.00% |
| Methane | Mol %: | 1.10% |
| Acetylene | Mol %: | 0.14% |
| HCN | Mol %: | 0.07% |
| Water | Mol %: | 0.00% |

The compressed tail gas stream is 82 432 000 Sm³/h (70.000 MMSCFD) of hydrogen at 97.49% purity, at 2 617.9 kPa (365 psig). The output of the PSA unit is 2 514.5 kPa (350 psig) at 43.3°C (110 ^{O} F) into the hydrogen product compressor (14) at 4,500 NHP and 136 kPa (5 psig) at 32.2°C (90 ^{O} F) into the PSA tail gas compressor (15) at 1,250 NHP. The hydrogen recovery out of the hydrogen PSA unit (13) is 89.5%. The output of the hydrogen product compressor (14) is hydrogen product with the following properties: 82 432 000 Sm³/h (70.000 MMSCFD) of hydrogen at 100% purity, 6 306 kPa (900 psig), 37.8°C (100 ^{O} F), 872 485 MJ (827.0 MMBTU) (HHV/hour) and 736 812 MJ (698.4 MMBTU) (LHV/hour). The fuel recovery out of the PSA Tail Gas compressor (15) is fuel with the following properties: 10 504 192 Sm³/h (8.920 MMSCFD) of fuel at 446 kPa (50 psig), 37.8°C (100 ^{O} F), 154 663 MJ (146.6 MMBTU) (HHV/hour) and 134 934 MJ (127.9 MMBTU) (LHV/hour).

### EXAMPLE 2

Figure 2 shows schematically natural gas (21) with the following properties-1 846 250 J/h (1750.0 BTU/hour), about 31 298 kg/h (34.5 tons/hr). -- going into the carbon black generating plant (22) with the following properties -- electrical efficiency 6 350 MW per hour per kg (7 megawatts per hour per ton (MW/hr/ton)), feedstock efficiency 66 995 590 MJ/kg (70 MMBTU/ton), carbon black production 181 436 940 kg/year (200,000 tons/year) and about 22 680 kg/h (25.00 tons/hour) --generating carbon black (23) and hydrogen (24) with the following properties - 1 095 090 MJ/h (1038 MMBTU/hour), and 8 618 kg/h (9.5 tons per hour). The hydrogen is flowed into a combined cycle power plant (25) with the following properties - heat rate fuel 6 857 500 J/kWh (6500 BTU/kilowatt hour (KWh)), heat rate steam 8 967 500 J/kWh (8500 BTU/KWh) -- producing 1157.6 megawatts (MW) of electricity, (26) 553 MW of which is flowed into a grid (27) and 175.0 MW (159.7 from hydrogen, 28.7 from steam, and 13.4 MW excess needed/produced ) which is flowed back into the carbon black generating plant (22). Natural gas (29) with the following properties - 6 646 500 MJ/h (6300 MMBTU/hour) -- is also flowed into the combined cycle power plant (25).

### EXAMPLE 3

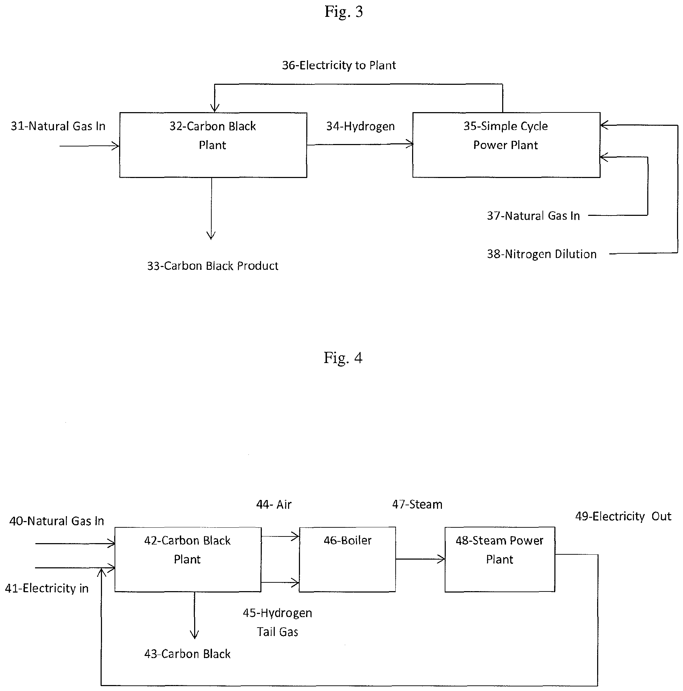

As shown schematically in Figure 3, natural gas (31) with the following properties-1 846 250 J/h (1,750.0 MMBTU/hour), about 31 298 kg/h (34.5 tons per hour (tons/hr))going into a carbon black generating plant (32) with the following properties -- electrical efficiency 6 350 MW per hour per kg (7 MW/hr/ton), feedstock efficiency 66 995 590 MJ/kg (70 MMBTU/ton), carbon black production 181 436 940 kg/year (200,000 tons/year) and about 22 680 kg/h (25.00 tons/hour), with a carbon dioxide reduction of 292 827.43 kg/year (322,787 tons per year), and a total feedstock efficiency of 83 744 488 MJ/kg (87.5 MMBTU per ton) -- generating carbon black (33) and hydrogen (34) with the following properties-1 107 750 MJ/h (1050.0 MMBTU/hour), 8 618 kg/h (9.5 tons/hr), 106,991 Nm³/hr (normal meter, i.e., cubic meter of gas at normal conditions, i.e. 0° C, and 1 atmosphere of pressure). The hydrogen is flowed into a simple cycle power plant (35) with the following propertiesheat rate fuel 8 967 500 J/kWh (8500 BTU/KWh) --producing 175.0 MW of electricity (36) (123.5 from hydrogen, 51.5 from natural gas) which is flowed back into the carbon black generating plant (32). Natural gas (37) with the following properties - 459 663.5 MJ/h (435.7 MMBTU/hour), 8631 kilograms per hour (Kg/hr), and 10,788 Nm³/hr - - and a nitrogen dilution (38) with the following properties - 46,822 Nm³/hr - is also flowed into the simple cycle power plant (25).

### EXAMPLE 4

As shown schematically in Figure 4, natural gas (41) with the following properties-1 846 250 MJ/h (1,750.0 MMBTU/hour), 513 molecular weight (grams/mole), about 31.298 kg/h (34.5 tons per hour (tons/hr)) -- is flowed into a carbon black generating plant (42) with the following properties -- electrical efficiency 6 350 MW per hour per kg (7 MW/hr/ton), feedstock efficiency 66 995 590 MJ/kg (70 MMBTU/ton), carbon black production 181 436 940 kg/year (200,000 tons/year) and 22 680 kg/h (25.00 tons/hour) -- generating carbon black (43) and hydrogen (45) with the following properties - 1 095 090 MJ/h (1038 MMBTU/hour), 8 618 kg/h (9.5 tons/hr.), and air (44) with the following properties - 302 785 MJ/h (287 MMBTU/hour), 84 molecular weight, at 800^{O}C. The hydrogen and air are flowed into a boiler (46) with a boiler efficiency of 0.85 which generates steam (47) with the following properties - 1 188 067 MJ/h (1,126.13 MMBTU/hour), at 165 bar and 565^{O}C. which is flowed into a conventional electricity generating steam power plant (48) with a steam cycle efficiency of 0.40. The electricity generated (49) having the following properties - 474 750 MJ/h (450 MMBTU/hour) and 132 MW condensing -- is flowed back into the carbon black generating plant (42). The conventional boiler and steam power plant could be a new plant located at the carbon black generating facility, or it could be an existing coal, oil, or gas fired power plant. In the case of an existing fossil fueled plant a significant reduction is the combustion of hydrocarbons, and the associated emissions of toxic and non-toxic air pollutants is also realized. The use of a conventional backpressure steam turbine integrated with an industrial steam process can also be used.

Thus, the scope of the invention shall include all modifications and variations that may fall within the scope of the attached claims. Other embodiments of the invention will be apparent to those skilled in the art from consideration of the specification and practice of the invention disclosed herein. It is intended that the specification and examples be considered as exemplary only, with a true scope of the invention being indicated by the following claims.

## Claims

1. A method of producing a purified hydrogen product, comprising:
passing tail gas from a carbon black generating plasma process into a pressure swing adsorption system generating the purified hydrogen product and a pressure swing adsorption tail gas;
separating and compressing the purified hydrogen product; and
separating and compressing the pressure swing adsorption tail gas for use as fuel, or reuse back into the carbon black generating process.

2. The method of claim 1, including mixing the tail gas from the carbon black generating process with a feed stream from a steam methane reformer to create a mixed tail gas, and passing the mixed tail gas into the pressure swing adsorption system.

3. The method of claim 2, wherein the feed stream from the steam methane reformer and the tail gas from the carbon black generating process are compressed prior to mixing.

4. The method of claim 1, including compressing a feed stream of hydrogen rich gas and adding it to the tail gas from the carbon black generating plasma process prior to passing the tail gas from the carbon black generating process into the pressure swing adsorption system.

5. The method of claim 4, wherein the hydrogen rich gas is generated from a steam reforming process.

6. The method of claim 1, wherein at least a portion of the pressure swing adsorption tail gas is used in the carbon black generating process.

## Patentansprüche

1. Verfahren zur Herstellung eines gereinigten Wasserstoffprodukts, umfassend:
Einleiten von Endgas aus einem Ruß erzeugenden Plasmaprozess in ein Druckwechsel-Adsorptionssystem, das das gereinigte Wasserstoffprodukt und ein Druckwechsel-Adsorptionsendgas erzeugt;
Abtrennen und Verdichten des gereinigten Wasserstoffprodukts, und
Abtrennen und Verdichten des Druckwechsel-Adsorptionsendgases zur Verwendung als Brennstoff oder zur Wiederverwendung zurück im Ruß erzeugenden Prozess.

2. Verfahren nach Anspruch 1, einschließlich Mischen des Endgases aus dem Ruß erzeugenden Prozess mit einem Feedstrom aus einem Methandampfreformer, um ein gemischtes Endgas zu erzeugen, und das Einleiten des gemischten Endgases in das Druckwechsel-Adsorptionssystem.

3. Verfahren nach Anspruch 2, wobei der Feedstrom aus dem Methandampfreformer und das Endgas aus dem Ruß erzeugenden Prozess vor dem Mischen verdichtet werden.

4. Verfahren nach Anspruch 1, einschließlich Verdichten eines Feedstroms aus wasserstoffreichem Gas und Zusetzen desselben dem Endgas aus dem Ruß erzeugenden Plasmaprozess vor dem Einleiten des Endgases aus dem Ruß erzeugenden Prozess in das Druckwechsel-Adsorptionssystem.

5. Verfahren nach Anspruch 4, wobei das wasserstoffreiche Gas in einem Dampfreformierungsprozess erzeugt wird.

6. Verfahren nach Anspruch 1, wobei mindestens ein Teil des Druckwechsel-Adsorptionsendgases in dem Ruß erzeugenden Prozess verwendet wird.

## Revendications

1. Procédé de production d'un produit d'hydrogène purifié, comprenant :
le passage d'un gaz résiduaire d'un procédé au plasma de génération de noir de carbone dans un système d'adsorption modulée en pression générant le produit d'hydrogène purifié et un gaz résiduaire d'adsorption modulée en pression ;
la séparation et la compression du produit d'hydrogène purifié ; et
la séparation et la compression du gaz résiduaire d'adsorption modulée en pression pour une utilisation comme carburant ou une réutilisation dans le procédé de génération de noir de carbone.

2. Procédé selon la revendication 1, comprenant le mélange du gaz résiduaire provenant du procédé de génération de noir de carbone avec un flux d'alimentation provenant d'un reformeur de méthane à la vapeur pour créer un gaz résiduaire mixte, et le passage du gaz résiduaire mixte dans le système d'adsorption modulée en pression.

3. Procédé selon la revendication 2, ledit flux d'alimentation provenant du reformeur de méthane à la vapeur et ledit gaz résiduaire provenant du procédé de génération de noir de carbone étant comprimés avant mélange.

4. Procédé selon la revendication 1, comprenant la compression d'un flux d'alimentation de gaz riche en hydrogène et son ajout au gaz résiduaire provenant du procédé au plasma de génération de noir de carbone avant le passage du gaz résiduaire du procédé de génération de noir de carbone dans le système d'adsorption modulée en pression.

5. Procédé selon la revendication 4, ledit gaz riche en hydrogène étant généré à partir d'un procédé de reformage à la vapeur.

6. Procédé selon la revendication 1, au moins une partie du gaz résiduaire d'adsorption modulée en pression étant utilisée dans le procédé de génération de noir de carbone.
